# EUROPEAN PATENT SPECIFICATION

(11) **EP 0 348 216 B1**
(45) Date of publication and mention of the grant of the patent: **22.03.1995**
(21) Application number: 89306376.8
(22) Date of filing: 23.06.1989
(51) Int. Cl.: G11B 23/03, G11B 23/033

(54) **Optical disc cartridge**
Kassette für optische Platte
Cartouche pour disque optique

(30) Priority: 23.06.1988 JP 155228/88; 04.07.1988 JP 88945/88; 07.07.1988 JP 90272/88
(43) Date of publication of application: 27.12.1989
(73) Proprietor: MITSUBISHI DENKI KABUSHIKI KAISHA, Tokyo 100 (JP)
(72) Inventor: Tani, Toyofumi C/o Oyokiki Kenkyusho, Amagasaki Shi Hyogo-ken (JP); Shimegi, Hiroo C/o Oyokiki Kenkyusho, Amagasaki-Shi Hyogo-ken (JP)
(74) Representative: Crawford, Fiona Merle

(56) References cited:
- EP-A- 0 277 809
- FR-A- 2 569 484

## Description

The present invention relates to an optical disc cartridge.

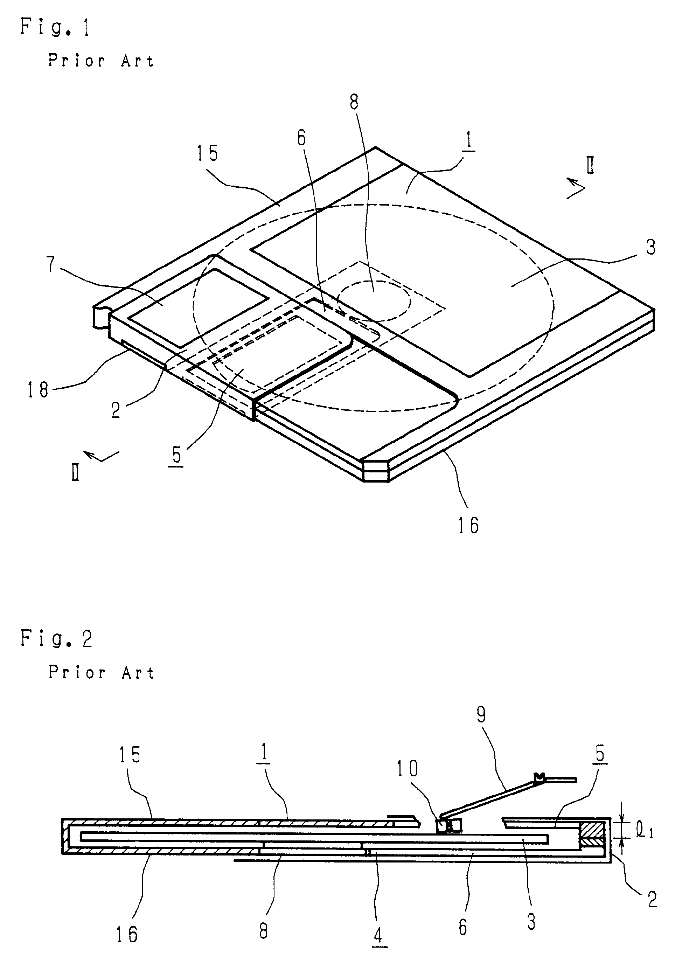

Fig. 1 of the accompanying drawings is a perspective view showing a construction of a known optical disc cartridge and Fig. 2 is a sectional view thereof on line II-II of Fig. 1. This cartridge is considered to represent the closest prior art. In Fig. 1, reference numeral 1 indicates a plastics case of an optical disc cartridge in which a magneto optical disc 3 is housed. The case 1 is shaped like a flat board being hollow inside and having a thickness of several millimeters. The case 1 comprises two flat members, that is, an upper case 15 and lower case 16. The lower case 16 has a first opening 4 comprising a rectangular hole 6 and a centre hole 8. This first opening 4 is provided for access of an optical head (not shown), and the width and length thereof are those sufficient to allow the optical head access to the magneto optical disc 3. Also, the upper case 15 has a second opening 5 of the same shape as that of the first opening 4. The second opening 5 is for a magnetic head 10 to access, and the width and length thereof are those sufficient to allow the magnetic head 10 set up on an arm 9 shown in Fig. 2 to access the magneto optical disc 3. The upper case 15 has thickness of ℓ₁.

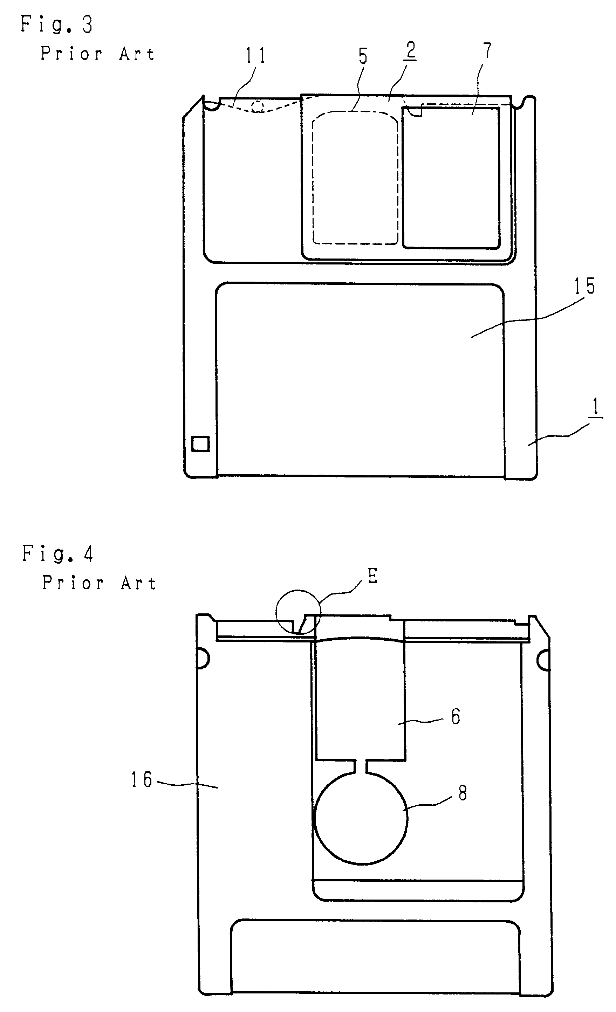

A shutter 2 of stainless steel thin board, which closes both the openings 4 and 5 of the case 1 when an optical disc cartridge is taken out of the disc driving unit, is provided at one end of the case 1 so that it, having a U-shaped section, has both faces of the case therebetween. The shutter 2 is installed so that it moves freely between a position for closing both openings 4 and 5 and a position for opening them. It is usually energized at the position for closing by means of a spring 11 (refer to Fig. 3). The shutter 2 has an aperture 7, facing the first opening 4 of the case 1 when the shutter 2 is at the position for opening, and having the same shape as the first opening, the magnetic head 10 accessing the magneto optical disc 3 therefrom. Figs. 3 to 6 show the case and the shutter described above in detail. Fig. 3 is a plan view of the upper case 15 side of the optical disc cartridge, when the shutter 2 is at the closing position. In the figure, reference numeral 11 is a spring which changes its shape by the movement of the shutter 2, and energizes the shutter 2 at the position closing the opening 5.

Fig. 4 shows a plan view of the lower case 16 side of the case 1. In the case of an optical disc cartridge, Fig. 4 shows the side for an optical head. In the figure, numeral 6 indicates a rectangular aperture used when an optical head (not shown) is inserted, and 8 indicates a circle aperture joining with the rectangular aperture, used for inserting a mount for fitting a magneto optical disc when the magneto optical disc is driven by a motor (not shown). These two apertures form the first opening 4.

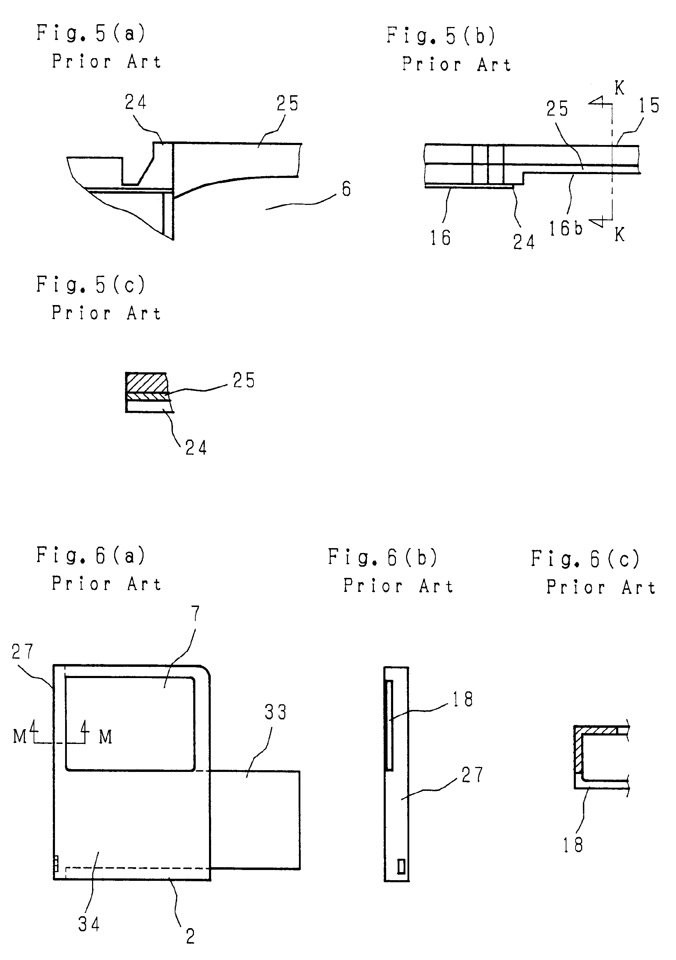

Fig. 5(a) is an enlarged view of portion E in Fig. 4, and Fig 5(b) is a plan view, taking Fig. 5(a) to be a front view and Fig. 5(c) is a sectional view on line K-K in Fig. 5(b). In these figures, numeral 25 indicates an outside board of the lower case 16, and since a notch 16b is formed at an end side of the aperture 6 of the first opening 4, the outside board 25 is thinner by a predetermined length than the other part 24 of the lower case 16. This leads an optical head to smooth accessing.

Fig. 6(a) is a plan view showing a known shutter, Fig. 6(b) is a left side view of the above, and Fig. 6(c) is a sectional view of the above on line M-M line in Fig. 6(a). The under face 33 of the lower case 16 side of the shutter 2 is narrower in width in comparison with the top face 34 of the upper case 15 side. An aperture 7 of approximately the same shape as the second opening 5 of the upper case is provided at the top face 34. A notch 18 is provided at the under face side of connecting portion 27 of the top face 34 with the under face 33. The notch 18 has a width which is the same as that of the aperture 7 and a depth corresponding to the notch 16b of the outside board 25 of the lower case 16.

EP-A-0133734 discloses a hard disc cartridge arrangement comprising a housing and a "door arrangement" which allows the heads of the disc drive to enter the cartridge from its upper and lower surfaces. In the open position, an aperture in the door arrangement coincides with one which extends through three side walls of the housing to reveal both sides of the disc.

US-A-4445157 discloses a flexible magnetic disc cassette, the cover of which containing the disc having pad and head insertion openings respectively on its opposite sides. The shutter has openings on the opposed plate portions thereof which are substantially the same shape as the pad and head openings, neither of which extend to the side edge of the cover. A guide groove is provided on the case along which the shutter slides.

US-A-4,680,662 discloses another flexible magnetic disc having a guide groove in the side edge of the cover.

Generally, a magnetic head is used for generating biased magnetic field for overwriting. However, as it cannot keep a recording medium away from itself when it is compared with an optical head, since the magnitude of magnetic field which is impressed by a slider-type magnetic head is small, the slider-type magnetic head 10 impresses magnetic field in the state that it rises from several »m to ten plus »m above a recording medium by means of dynamic pressure. (Fixed-type magnetic head is used in the state that it is kept about tens to 100»m apart from a recording medium.) Accordingly, in the conventional magneto optical disc, since the opening 5 is formed only on one side surface of the case, when an optical disc cartridge for a magneto optical disc is inserted into the disc driving unit, the magnetic head 10 has to get over the end surface of the case 1, thereby causing a problem in that an elevating mechanism has to be provided on an arm 9. This leads to a larger disc driving unit and complicated driving system for the magnetic head.

Since the distance between the magnetic head 10 and the recording medium is very small, there is a problem in that where the air inflowing from outside of the optical disc cartridge includes dust, the dust results in the air flow being cut off, thereby prohibiting the magnetic head 10 from rising and sometimes causing the magnetic head to fall down on to the recording medium. Also, there is a problem that air flow is not stabilized on the surface of the recording medium which faces the magnetic head 10, since there is no air intake in the upper case 15.

An object of the present invention is to provide an optical disc cartridge which can do without an elevating mechanism for the magnetic head.

Another object of the present invention is to provide an optical disc cartridge which controls the movement of a shutter and whose connecting part is strengthened.

An object of an embodiment of the present invention is to provide an optical disc cartridge which supplies clean air all over the surface of a magneto optical disc facing a magnetic head.

According to the present invention there is provided an optical disc cartridge comprising:
a case containing a magneto-optical disc, which case has first and second opposing side walls, said first side wall having an opening for a magnetic head, and said second side wall having an opening for an optical head, a recessed portion which extends from said opening in said second side wall through an end wall of the case located between said first and second side walls, and a guide groove in said second side wall adjacent to and parallel with said end wall; and
a substantially U-shaped shutter under which a portion of said first and second side walls and said end wall is located, which shutter is spring biased towards and movable from a position for closing to a position for opening said openings, said shutter has openings which correspond to the opening in said case defined by said opening in said first side wall and said recessed portion in said second side wall and said end wall when said shutter is in said position for opening, and has a projection which extends into said guide groove and is movable therein;
characterised in that:
said first side wall has a recessed portion which extends from the opening in said first side wall through said end wall so that said two recessed portions are not connected through said end wall ;
a further groove is provided in said end wall, which groove extends from and is flush with the base in said end wall of the recessed portion of said second side wall;
a further opening is provided in said shutter, which opening corresponds with an opening in the end wall of the case defined by said recessed portion in said first side wall, when said shutter is in said position for opening; and
said shutter comprises a further projection which extends from that edge of said opening parallel and adjacent to said base in said end wall, which projection is received in said further groove for movement therein with movement of the shutter between said positions for opening and closing.

An embodiment of the present invention provides an optical disc cartridge which supplies clean air all over the surface of a magneto optical disc facing a magnetic head by providing an air intake with a filter at the surface of an optical disc cartridge facing the magnetic head.

Embodiments of the present invention will now be described, by way of example with reference to the following accompanying drawings, in which:
Fig. 1 is a perspective view of a known optical disc cartridge;
Fig. 2 is a sectional view on line II-II of the cartridge shown in Fig. 1;
Fig. 3 is a plan view of a known case;
Fig. 4 is a plan view showing a first opening side board of a known case;
Fig. 5 is a partially enlarged view of portions of the case shown in Fig. 4;
Fig. 6 is a plan view, a side view and a sectional view of known shutter;
Fig. 7 is a perspective view of an optical disc cartridge of an embodiment of the present invention;
Fig. 8 is a sectional view on line VIII-VIII of the cartridge shown in Fig. 7,
Fig. 9 is a plan view showing a first opening side board of a case,
Fig. 10 shows enlarged partial views of the case shown in Fig. 9;
Fig. 11 shows a plan view and a sectional view of a shutter of an embodiment of the present invention,
Fig. 12 is a back plan view, a front view and sectional views of the shutter shown in Fig. 11,
Fig. 13 shows explanatory views of the configuration of a shutter,
Fig. 14 is a construction view of another embodiment of a shutter of an embodiment of the present invention;
Fig. 15 is a perspective view of an optical disc cartridge of an embodiment of a further invention.
Fig. 16 is a sectional view on line XVI-XVI of the cartridge shown in Fig. 15;
Fig. 17 is an enlarged plan view showing the shape of a second opening;
Fig. 18 is a side view showing the relationship between a magnetic head and a magneto optical disc, and
Fig. 19 is a plan view of an embodiment of an optical disc cartridge showing air flow in a case.

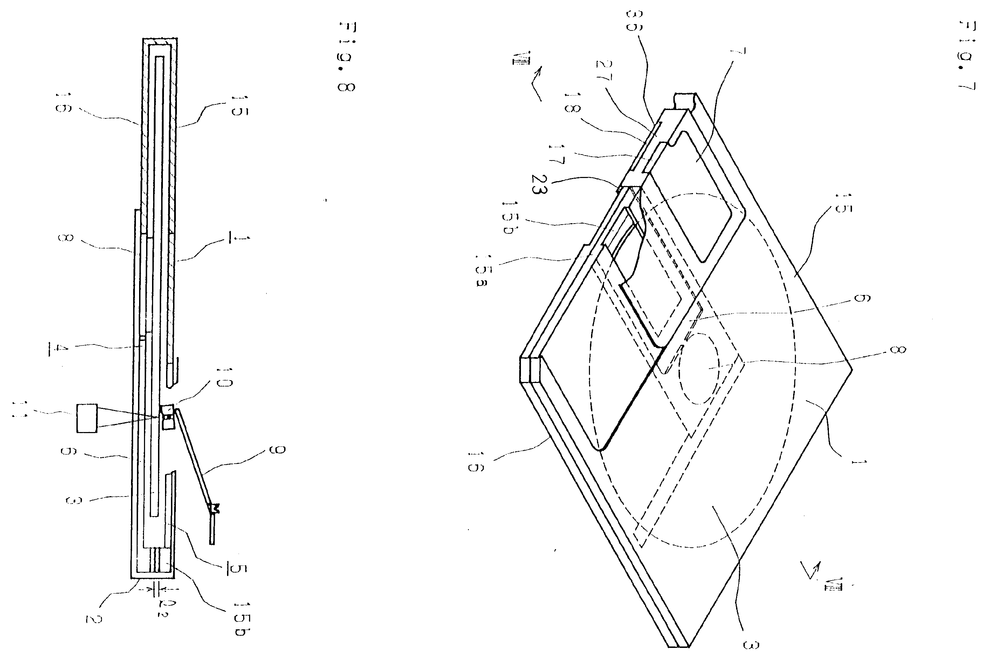

Fig. 7 is a perspective view showing a construction of an embodiment of an optical disc cartridge of the present invention. Fig. 8 is a sectional view of this optical disc cartridge on line VIII-VIII in Fig. 7. In the figures, reference numeral 1 indicates a plastics case of optical disc cartridge wherein a magneto optical disc 3 is housed. The case 1 is shaped like a flat board being hollow inside and having a thickness of several millimeters, comprising two flat members, that is, an upper case 15 and lower case 16. The lower case 16 has a first opening 4 comprising a rectangular hole 6 and a centre hole 8. The first opening 4 is for access of an optical head (11), and the width and length thereof are sufficient for the optical head to access a magneto optical disc 3. Also, the upper case 15, has a second opening 5 for a magnetic head 10. The second opening 5 joins with a notch 15b which is a cut-off portion of an end surface 15a of the upper case 15, having a length which is enough for a magnetic head 10 to access the innermost track of the magneto optical disc 3. The width of the opening 5 is determined so that the slider-type magnetic head 10 which is set up on an arm 9 as shown in Fig. 8, can access all the track of the magneto optical disc, at the position where the magnetic head 10 faces an optical head 11. Thickness ℓ₂ of the case in the figure is thinner than that ℓ₁ of the conventional case by the length cut off.

Reference numeral 2 indicates a shutter, 17 indicates a notch at the upper case 15 side of the shutter 2, and 27 shows a bridge at the one end surface side of the case. The shutter 2 which is of stainless steel thin board, closes both the openings of the case 1 when an optical disc cartridge is taken out of the disc driving unit. This is located at one end of the case 1 so that having a U-shaped section it has both faces of the case therebetween. The shutter 2 is installed so that it moves freely between a position for closing both openings 4 and 5 and a position for opening them. It is usually energized to the position for closing be means of a spring (not shown). When the shutter 2 is at a position for opening, an aperture 7 therein faces the second opening 5 of the case 1, being wider in width and joining with a notch 17 engaging a notch 15b of the upper case 15. A notch 18 is also provided which faces a notch 16b of the lower case 16.

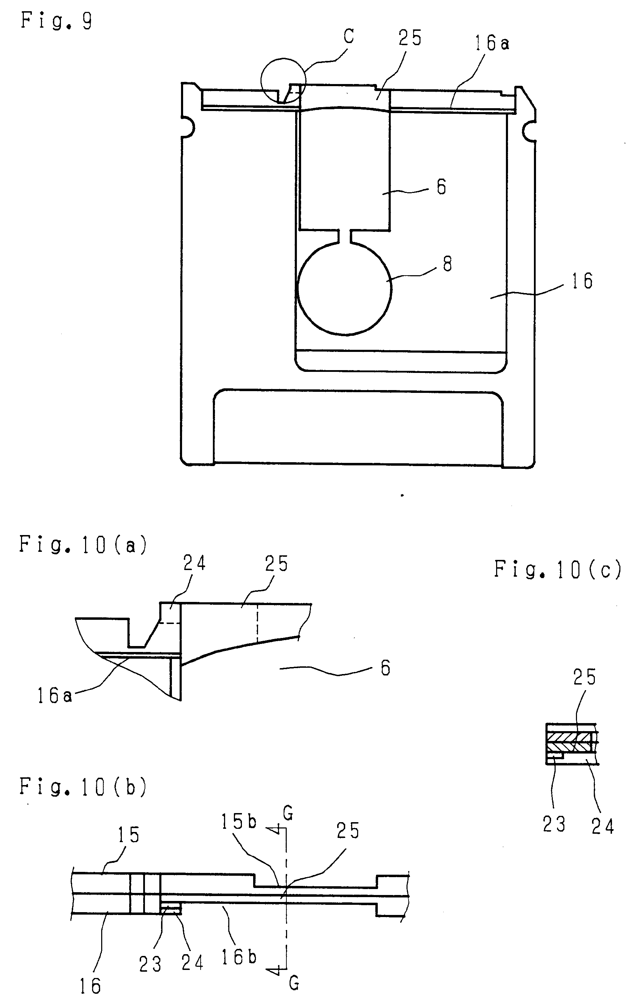

Fig. 9 is a plan view of the lower case 16 side of the case 1. In the case of a magneto optical disc, Fig. 9 shows the side at which an optical head 11 is located. In the figure, reference numeral 6 indicates a rectangular aperture used when an optical head 11 is inserted, and 8 indicates a circle aperture which joins with the rectangular aperture, used for inserting a mount for fitting a magneto optical disc when the magneto optical disc is driven by a motor (not shown). These two apertures form the first opening 4. In the vicinity of an end portion of the insertion side of the lower case 16, is a guide groove 16a for the shutter 2.

Fig. 10(a) is an enlarged view of a portion C indicated in Fig. 9, Fig. 10(b) is a plan view where the view of Fig. 10(a) is taken to be a front view, and Fig. 10(c) is a sectional view on line G-G in Fig. 10(b). In these figures, reference numeral 25 indicates an outside board of the lower case 16. Since a notch 16b is provided at an end side of the aperture 6 of the first opening 4, the outside board is thinner, by a predetermined length, than the other part 24 of the lower case 16. This leads an optical head to smooth accessing. Also, at an end surface of the lower case 16, is a groove 23 flush with the notch 16b of the outside board 25 with which an under board 26 of the shutter 2 (to be described later) is engaged. At an end surface of the upper case 15 is a notch 15b which joins with the second opening 5. The width of the notch 15b is a little larger than the largest width of the magnetic head 10. Thus, it is not necessary for the magnetic head 10 to rise and fall to get over the end portion 15a of the upper case 15.

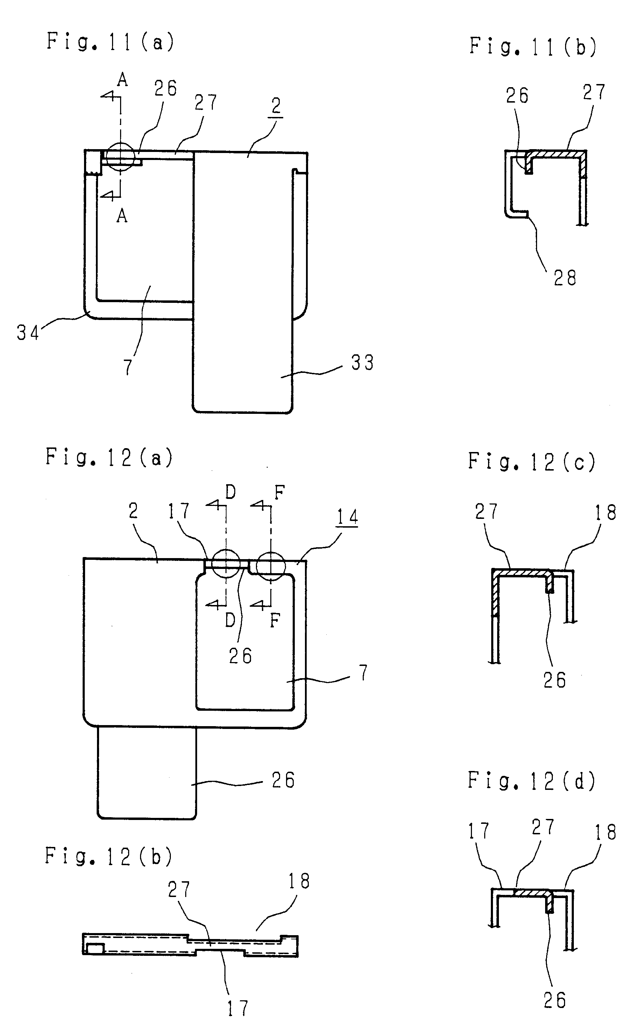

Fig. 11 and Fig. 12 are plan views showing the construction of a shutter. Fig. 11(a) is a plan view of the shutter viewed from the lower case side, Fig. 11(b) is a sectional view of the shutter on line A-A in Fig. 11(a). Fig. 12(a) is a plan view of the shutter viewed from the upper case side, and Fig. 12(b) is a front view of the shutter, and Figs. 12(c) and 12(d) are sectional views of the shutter on lines F-F and D-D respectively in Fig. 12(a). An under face 33 at the lower case 16 side of the shutter 2 is narrower in width when compared with a top face 34 of the upper case 15 side. The top face 34 has an aperture 7 of approximately the same shape as the second opening 5 of the upper case 15. The under face side of a connecting portion 27 of the top face 34 with the under face 33, has a notch 18 having the same width as the aperture 7 and a depth corresponding to the notch 16b of the outside board 25 of the lower case 16. At the edge of the connecting portion 27 is the under board 26 which is bent into an L-shape and is to be engaged with the aforesaid groove 23. Also, at the top face 34 side of the connecting portion 27 is a notch 17 of approximately the same width as that of the notch 15b joining with the second opening 5. Also, at both ends of the under face 33 is a guide claw 28 which is bent into an L-shape. The claw 28 engages with the guide groove 16a to guide the movement of the shutter 2.

When an optical disc cartridge of the above construction is set in a disc driving unit not shown, the shutter 2 is moved from a position for closing to a position for opening by means of driving means provided in the disc driving unit, and the aperture 7 of the shutter 2 and the second opening 5 of the upper case 15 coordinate with each other. At that time, since the notch 15b and the notch 17 are at the end portion 15a of the upper case 15 and at for connecting portion 27 of the shutter 2, respectively, and the thickness of the end portion of the case 1 is thinner than the conventional one, the magnetic head 10 is arranged on the recording medium 3 without getting over the end surface of the case 1.

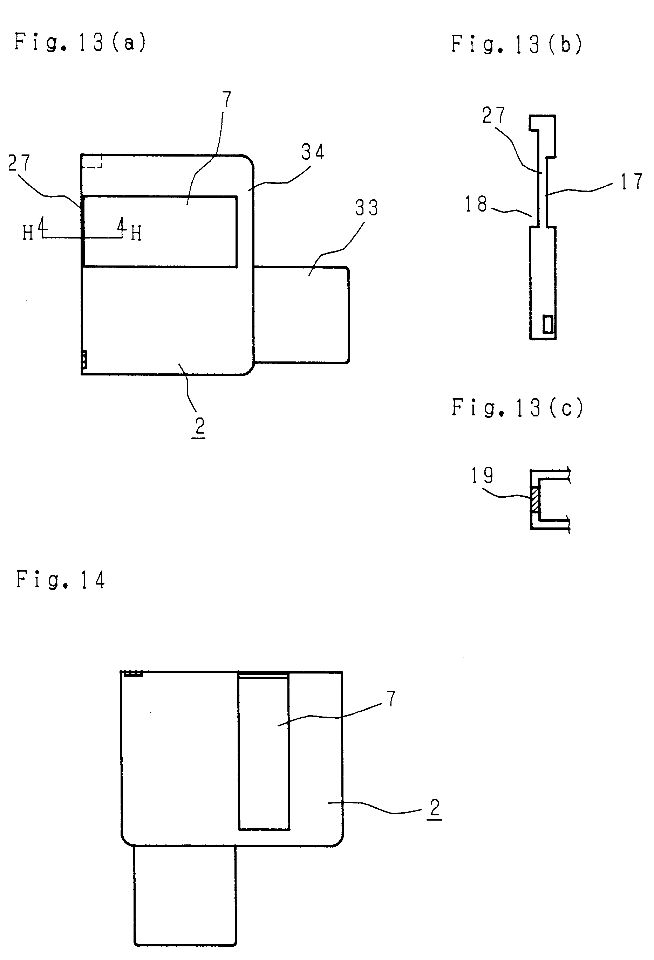

Fig. 13(a) is a plan view showing a construction of a shutter of an optical disc cartridge, Fig. 13(b) is a side view thereof, and Fig. 13(c) is a sectional view of the shutter on line H-H in Fig. 13(a). In this arrangement, unlike the embodiment of the present invention described above, a bent under board 26 is not provided and notch 17 has the same width as that of aperture 7, thereby, simplifying manufacturing and reducing costs. However, the strength for bending is lower because the width of end face 27 is narrow and is not bent.

From this point of view, the embodiment shown in Fig. 11 and Fig. 12 has few problems as regards strength since it has a section of L-shape and C-shape. It is also capable of having a function of positional control by moving the shutter 2 with making the under board 26 go along with the groove 23.

Fig. 14 shows a further embodiment in which the width of opening is reduced corresponding to the size of the magnetic head. Since the thickness of the shutter is thin, being usually about 0.3 mm, the above method increases the strength. In this figure, reference numeral 7 is an aperture.

As mentioned above, the present invention has advantages, for example, there is no need for an arm which carries a magnetic head to have a rise and fall function, the disc driving unit can be small in size and accessing time can be reduced, by forming an opening for access of the magnetic head by cutting off an end of a case. Simultaneously, a groove, formed at the case, has also an effect for positional control of the shutter movement.

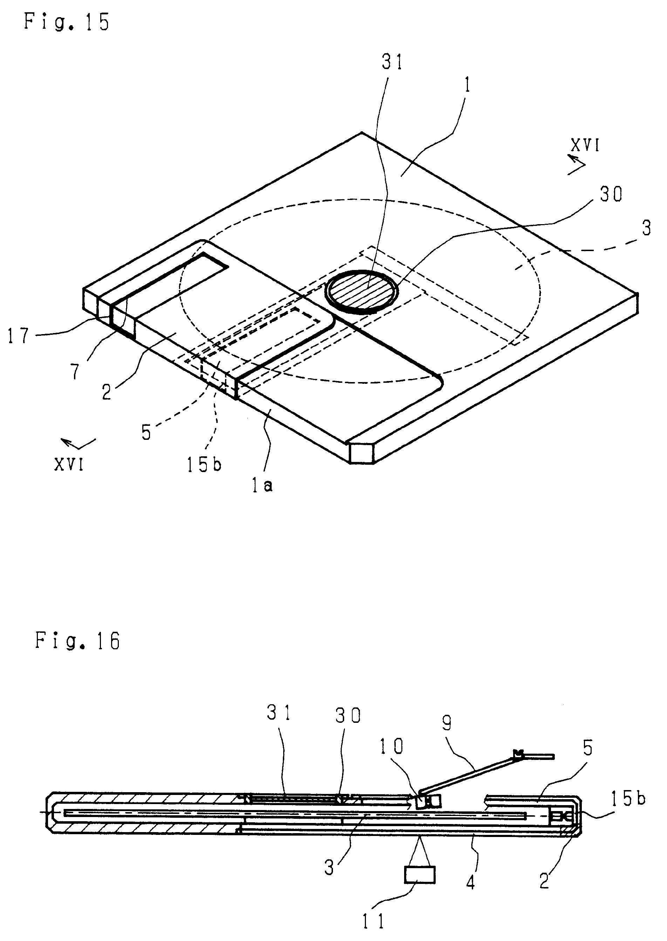

Next, explanation will be given of a further feature of embodiments of the present invention. Fig. 15 is a perspective view showing the construction of an embodiment of an optical disc cartridge illustrating this further feature, and Fig. 16 is a sectional view of the optical disc cartridge on line XVI-XVI in Fig. 15. In these figures, reference numeral 1 indicates a plastics case of an optical disc cartridge in which a magneto optical disc 3 is housed. The case is shaped like a flat board being hollow inside, and having a thickness of several millimeters, and has a rectangular first opening 4 comprising a centre hole 8 at one surface. The first opening 4 is for access of an optical head 11, and has a width and length sufficient to allow the optical head 11 access to the magneto optical disc 3.

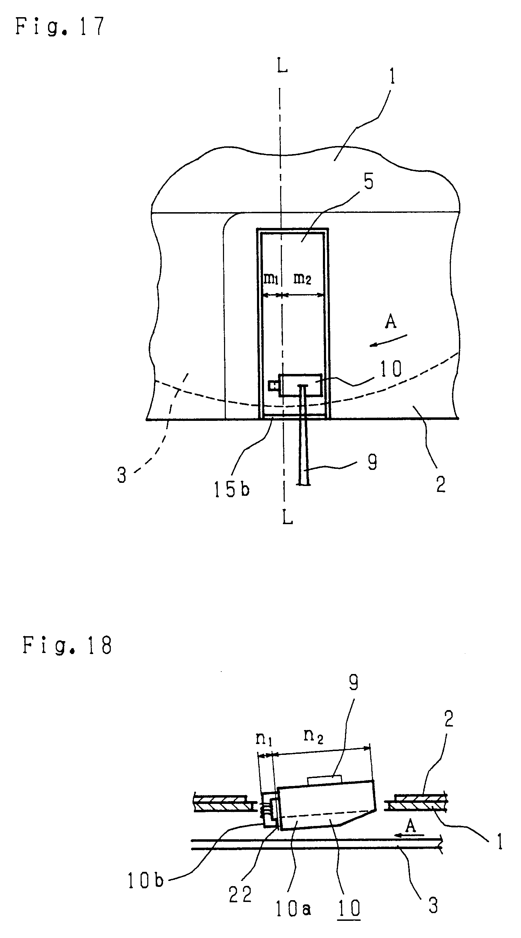

Fig. 17 is an enlarged plan view showing the shape of a second opening 5 when the shutter 2 is positioned at the opening. At the other surface of the case 1 is the second opening 5 for the magnetic head 10 having a smaller width than that of the first opening 4. The second opening 5 joins with a notch 15b which is a cut off portion of an end surface of the case 1, having a length which is enough for a magnetic head 10 to access the innermost track of the magneto optical disc 3 in the vicinity of the centre position at said other surface. The width of the second opening 5 is determined so that the slider-type magnetic head 10 which is set up on an arm 9 as shown in Fig. 17, can access all the track of the magneto optical disc at the position in which the magnetic head 10 faces an optical head 11. Furthermore, the second opening 5 is formed asymetrically in width to the dimensional centre line L-L of the case 1, and the relationship between the distance m₂ from an end portion of the upstream side of the magneto optical disc 3 in the rotational direction shown by an arrow "A" to the centre line L-L and the distance m₁ from an end portion of downstream side to the centre line L-L is m₁ < m₂.

The surface of the second opening 5 side of the case 1 has a round shaped air intake 30 formed with the rotational centre of the magneto optical disc 3 as the centre position, the air intake 30 being provided with a filter 31 having numerous pores of about 0.5 »m.

On the other hand, a shutter 2 of stainless steel thin board, which closes both the openings 4 and 5 of the case 1 when an optical disc cartridge is taken out of the disc driving unit, is located at one end 1a of the case 1 so that it, having a U-shaped section, has both faces of the case therebetween. The shutter 2 is installed so that it moves freely between a position for closing both openings 4 and 5 and a position for opening them. It is usually energized at a position for closing by means of a spring (not shown). The shutter 2 has an aperture 7 which coordinates with the second opening 5 of the case 1 when the shutter 2 is at the position for opening, has the same shape as the opening 5, and has a notch 17.

Fig. 18 is a side sectional view showing the relationship between a magnetic head and a magneto optical disc. The magnetic head 10 comprises a slider portion 10a which rises by dynamic pressure caused by rotation of the magneto optical disc 3, and a head portion 10b which is approximately C-shaped, its upper end being fixed to the slider portion 10a, and its lower end being spaced by a predetermined gap 22 from the slider portion 10a. By coinciding the centre position of the gap 22 with the centre line L-L shown in Fig. 17, the spot position of the optical head 11 corresponds to the centre position of the gap 22. The relationship between the distance m₁ and the distance m₂ must be determined in proportion to the distance n₁ from the centre position of the gap 22 to the end portion of the head portion 10b, and the distance n₂ from the centre position of the gap 22 to the end portion of the slider portion 10a.

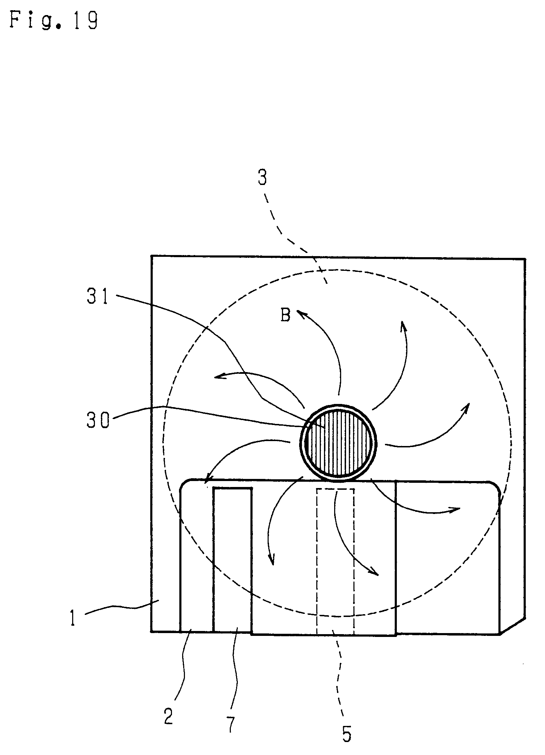

Next, explanation will be given of its operation. Fig. 19 is a plan view of an optical disc cartridge, showing air flow taken into the case. The dust in the air taken in from the air intake 30 is removed by a filter 31, cleansed and then supplied on to the magneto optical disc 3. The air supplied proceeds from the centre to the periphery by means of the rotation of the magneto optical disc 3, and is diffused uniformly as shown by an arrow "B", forming stabilized air flow. By means of dynamic pressure, the magnetic head 10 rises keeping the gap between the magneto optical disc 3 and itself constant. When an optical disc cartridge is set in the disc driving unit (not shown), the shutter 2 is moved from the position for closing to the position for opening, and the notch 17 of the shutter 2 coordinates with the second opening 5 of the case 1. The magnetic head 10 is arranged on the magneto optical disc 3 without getting over the end surface of the case 1 since the notch 15b of the case is open.

Furthermore, in this embodiment, although the air intake is circular in shape, and the centre position thereof is the rotational centre of the magneto optical disc, this invention is not limited to this arrangement. The air intake may not necessarily be circular in shape, and the centre position may not necessarily coincide with the rotational centre.

As described heretofore, according to this further feature, it is possible to supply clean air from the centre of the magneto optical disc to its periphery, and to make the air flow uniform and stabilized.

Furthermore, although the shutter is described above as being made of stainless steel, the material of the shutter may not only be of stainless steel but also be of, for example, a synthetic resin.

## Claims

1. An optical disc cartridge comprising:
a case (1) containing a magneto-optical disc (3), which case has first and second opposing side walls, said first side wall (15) having an opening (5) for a magnetic head (10), and said second side wall (16) having an opening (4) for an optical head (11), a recessed portion (16b) which extends from said opening (4) in said second side wall (16) through an end wall of the case located between said first and second side walls, and a guide groove (16a) in said second side wall (16) adjacent to and parallel with said end wall; and
a substantially U-shaped shutter (2) under which a portion of said first and second side walls, and said end wall is located, which shutter is spring biased towards and movable from a position for closing to a position for opening said openings (4,5), said shutter (2) has openings (7,18) which correspond to the openings in said case defined by said opening (5) in said first side wall (15) and said recessed portion (16b) in said second side wall (16) and said end wall when said shutter is in said position for opening, and has a projection (28) which extends into said guide groove (16a) and is movable therein;
characterised in that:
said first side wall (15) has a recessed portion (15b) which extends from the opening (5) in said first side wall (15) through said end wall so that said two recessed portions (15b, 16b) are not connected through said end wall;
a further groove (23) is provided in said end wall, which groove extends from and is flush with the base in said end wall of the recessed portion (16b) of said second side wall (16);
a further opening (17) is provided in said shutter (2), which opening corresponds with an opening in the end wall of the case defined by said recessed portion (15b) in said first side wall (15), when said shutter (2) is in said position for opening; and
said shutter comprises a further projection (26) which extends from that edge of said opening (18) parallel and adjacent to said base in said end wall, which projection is received in said further groove (23) for movement therein with movement of the shutter between said positions for opening and closing.

2. A cartridge claimed in claim 1, further comprising an air intake (30) for taking air into said case from the outside, and which has a filter (31) for excluding dust in the air.

3. A cartridge as claimed in claim 2 wherein said air intake (30) is provided in said first side wall (15) of the case at the rotational centre of the magneto-optical disc (3).

## Patentansprüche

1. Kassette für eine optische Platte, mit:
einem eine magneto-optische Platte (3) enthaltenden Gehäuse (1), das erste und zweite einander gegenüberliegende Seitenwände aufweist, wobei die erste Seitenwand (15) eine Öffnung (5) für einen magnetischen Kopf (10) und die zweite Seitenwand (16) eine Öffnung-für einen optischen Kopf (11) aufweist, einem ausgesparten Bereich (16b), der sich von der Öffnung (4) in der zweiten Seitenwand (16) durch eine Stirnwand des Gehäuses zwischen der ersten und der zweiten Seitenwand erstreckt, und einer Führungsnut (16a) in der zweiten Seitenwand (16), die an die Stirnwand angrenzt und parallel zu ihr verläuft, und
einem im wesentlichen U-förmigen Verschluß (2), unter dem ein Teil der ersten und der zweiten Seitenwand und die Stirnwand angeordnet sind, der in Richtung auf eine Position zum Schließen federnd vorgespannt und aus dieser heraus in eine Position zum Öffnen der Öffnungen (4,5) bewegbar ist, wobei der Verschluß (2) Öffnungen (7,18) aufweist, die mit den Öffnungen in dem Gehäuse korrespondieren, welche durch die Öffnung (5) in der ersten Seitenwand (15) und den ausgesparten Bereich (15b) in der zweiten Seitenwand (16) und der Stirnwand gebildet sind, wenn sich der Verschluß in der Position zum Öffnen befindet, und einen Vorsprung (28) aufweist, der in die Führungsnut (16a) hineinragt und darin bewegbar ist,
**dadurch gekennzeichnet daß**
die erste Seitenwand (15) einen ausgesparten Bereich (15b) aufweist, der sich von der Öffnung (5) in der ersten Seitenwand (15) durch die Stirnwand erstreckt, so daß die beiden ausgesparten Bereiche nicht durch die Stirnwand miteinander verbunden sind,
in der Stirnwand eine weitere Nut (23) vorgesehen ist, die sich von der Basis in der Stirnwand des ausgesparten Bereiches (16b) der zweiten Seitenwand erstreckt und mit dieser Basis bündig ist,
in dem Verschluß (2) eine weitere Öffnung (17) vorgesehen ist, die mit einer Öffnung in der Stirnwand des Gehäuses korrespondiert, die durch den ausgesparten Bereich (15b) in der ersten Seitenwand (15) gebildet wird, wenn der Verschluß (2) sich in der Position zum Öffnen befindet, und
der Verschluß einen weiteren-Vorsprung (26) aufweist, der von demjenigen Rand der Öffnung (18) absteht, der parallel zu der Basis in der Stirnwand ist und an diese Basis angrenzt, wobei der Vorsprung in der weiteren Nut (23) zur Bewegung in dieser mit der Bewegung des Verschlusses zwischen den Positionen zum Öffnen und Schließen aufgenommen ist.

2. Kassette nach Anspruch 1, ferner mit einem Lufteinlaß (20) zum Einlassen von Luft von außen in das Gehäuse, der ein Filter (31) zum Fernhalten von Staub in der Luft aufweist.

3. Kassette nach Anspruch 2, bei der der Lufteinlaß (30) in der ersten Seitenwand (15) des Gehäuses an dem Drehmittelpunkt der magneto-optischen Platte vorgesehen ist.

## Revendications

1. Cartouche pour disque optique comprenant :
un boîtier (1) contenant un disque magnéto-optique (3), lequel boîtier présente des première et deuxième parois latérales opposées, ladite première paroi latérale (15) présentant une ouverture (5) pour une tête magnétique (10), et ladite deuxième paroi latérale (16) présentant une ouverture (4) pour une tête optique (11), une partie évidée (16b) qui s'étend à partir de ladite ouverture (4) dans ladite deuxième paroi latérale (16) à travers une paroi d'extrémité du boîtier située entre lesdites première et deuxième parois latérales, et une gorge (16a) de guidage dans ladite deuxième paroi latérale (16) adjacente et parallèle à ladite paroi d'extrémité ; et
un volet (2) sensiblement en U, sous lequel une partie desdites première et deuxième parois latérales, et ladite paroi d'extrémité sont situées, lequel volet est poussé élastiquement vers et mobile à partir d'une position de fermeture jusqu'à une position d'ouverture desdites ouvertures (4, 5), ledit volet (2) présente des ouvertures (7, 18) qui correspondent aux ouvertures dans ledit boîtier délimitées par ladite ouverture (5) dans ladite première paroi latérale (15) et ladite partie évidée (16b) dans ladite deuxième paroi latérale (16) et ladite paroi d'extrémité quand ledit volet est dans ladite position d'ouverture, et présente une saillie (28) qui s'étend à l'intérieur de ladite gorge (16a) de guidage et y est mobile ;
caractérisée en ce que :
ladite première paroi latérale (15) présente une partie évidée (15b) qui s'étend à partir de l'ouverture (5) dans ladite première paroi latérale (15) à travers ladite paroi d'extrémité de sorte que lesdites deux parties évidées (15b, 16b) ne sont pas reliées par l'intermédiaire de ladite paroi d'extrémité ;
une gorge (23) supplémentaire est prévue dans ladite paroi d'extrémité, laquelle gorge s'étend à partir de et au niveau de la base dans ladite paroi d'extrémité de la partie évidée (16b) de ladite deuxième paroi latérale (16) ;
une ouverture supplémentaire (17) est prévue dans ledit volet (2), laquelle ouverture correspond à une ouverture dans la paroi d'extrémité du boîtier délimitée par ladite partie évidée (15b) dans ladite première paroi latérale (15), quand ledit volet (2) est dans la position d'ouverture ; et
ledit volet comprend une saillie (26) supplémentaire qui s'étend à partir du bord de ladite ouverture (18) qui est parallèle et adjacent à ladite base dans ladite paroi d'extrémité, laquelle saillie est reçue dans ladite gorge (23) supplémentaire pour s'y déplacer avec le déplacement du volet entre lesdites positions d'ouverture et de fermeture.

2. Cartouche selon la revendication 1, comprenant en outre une entrée d'air (30) pour amener de l'air à l'intérieur du boîtier en provenance de l'extérieur, et qui présente un filtre (31) pour éliminer la poussière dans l'air.

3. Cartouche selon la revendication 2, dans laquelle ladite entrée d'air (30) est prévue dans ladite première paroi latérale (15) du boîtier au centre de rotation du disque magnéto-optique (3).
